Europäisches Patentamt

European Patent Office

Office européen des brevets

(11) Publication number: **0 119 671**
A1

(12) # EUROPEAN PATENT APPLICATION

(21) Application number: 84200415.2

(22) Date of filing: 22.03.84

(51) Int. Cl.³: **F 01 M 11/12**, F 16 N 31/02, B 08 B 1/00, B 65 D 1/22

(30) Priority: 22.03.83 NL 8301022

(43) Date of publication of application: 26.09.84
Bulletin 84/39

(84) Designated Contracting States: **AT BE CH DE FR GB IT LI LU NL SE**

(71) Applicant: Timmerman, Adrianus Lubertus, Rijnstraat 8, NL-3299 XE Maasdam (NL)

(72) Inventor: Timmerman, Adrianus Lubertus, Rijnstraat 8, NL-3299 XE Maasdam (NL)

(74) Representative: Lips, Hendrik Jan George, Ir. et al, HAAGSCH OCTROOIBUREAU Postbus 97702, NL-2509 GC 's-Gravenhage (NL)

(54) Device for wiping off an oil dip stick or a similar oblong object.

(57) Device for wiping off an oil dip stick or a similar oblong object, said device comprising a casing (1) which is closed essentially at all sides, of which casing (1) two essentially oppositely situated wall section (4,5) are provided with a passage opening (14,15) for moving a dip stick to and fro through the casing (1), in said casing two pieces of plate shaped foam material being provided along which the dip stick can be slid for wiping it off, the edges (8,9) of said passage openings (14,15) being bent inwards to compress the foam material (6) firmly in the casing (1), at least one wall (2) of the casing (1) being provided with means (16) with which the casing, either in a detachable manner or not, can be fastened to a wall, such as the wall of an engine compartment.

Device for wiping off an oil dip stick or a similar oblong object.

The invention relates to a hitherto unknown device, namely a device for wiping off an oil dip stick or a similar oblong object, said device comprising a casing which is closed essentially at all sides, of which casing two essentially oppositely situated wall sections are provided with a passage opening for moving a dip stick to and fro through the casing, in said casing a material being provided along which or through which the dip stick can be slid for wiping it off.

Such a device provides the major advantage, that no longer use has to be made of a cloth or piece of paper if the oil level of an engine is to be checked. Especially when checking the oil level of a motor vehicle, a cloth or piece of paper is not always available. If such a cloth or piece of paper is available, it may present problems again when it is to be disposed of after it has been stained by the oil.

In case of the device according to the present invention the oil-stained material is provided within the casing so that the device can be placed in the cabin of a motor vehicle after its use without any objection. According to a preferred embodiment of the invention, however, a wall of the casing is provided with means with which the casing can be fastened to a wall of the engine compartment.

In this way it is achieved that the device according to the invention is immediately at hand for use, and that any pollution of the interior of the cabin is avoided. It has appeared to be an additional advantage that, as a result of the presence of the engine, which is hot during operation, the material provided in the casing dries out again after its use, so that the device can be used a number of times without objection.

The means for fastening the casing, either in a detachable way or not, are formed by adhesive or magnetic means, such as these are also used e.g. for fastening spectacle cases and the like in the cabin of a vehicle.

According to a preferred embodiment of the invention, the casing has essentially the shape of a parallelepiped, whereas the edges of the passage openings are bent inwards.

This implies a simple construction of the device. It is achieved, because of the inwards bent edges, that the wiping off material is provided at some distance of the outer surface of the two wall sections which are provided with the passage openings.

According to a preferred embodiment of the invention, the casing is made of synthetic material by means of die-casting and that wall section which is provided with a passage is hinged to the rest of the casing by means of a thin section of said synthetic material.

This allows a simple manufacture of the device and it is also easy to apply the wiping off material in the casing. Those edges of the casing and of the wall section hinged thereto which are situated opposite the hinged edges, will be provided with means which can co-operate by snapping into one another. In this way it is achieved that the casing will remain closed even when a load is exerted on the wiping off material provided in the casing.

The material for wiping off a dip stick preferably will consist of two plate-shaped pieces of foam material, which can be placed against one another in the casing in such a way, that their contact plane lies in the plane passing through the centre line of the elongated passage openings in the casing.

In this way it is achieved that the dip stick, after having been placed approximately in the centre of the one elongated passage opening, will be slid easily towards the centre of the other passage opening, as it is in that direction that it is subjected to the least resistance. This makes it possible to keep the free passage of the openings between certain limits, without there being a great risk that the dip stick, after having been slid into the first passage opening, will hit the wall in which the other passage opening is provided.

In order to facilitate even more the application of the wiping off material in the casing and to assure that the material is accomodated firmly by the casing, it may be provided that the walls of the casing slightly taper towards one another from the wall section hinged thereto onwards. Thus the pieces of foam material can be slid easily into the casing and are then pressed by the hinged wall section, and in particular by the inwards bent edges of the passage opening in the hinged wall section.

The invention will be further explained in the following with reference to an example of an embodiment, shown in the drawing, in which:
figure 1 shows a section of a device according to the invention along the line I-I of figure 2;
figure 2 shows a section along the line II-II of figure 1; and
figure 3 shows a partial section in accordance with figure 1, but with the lid in the position during the die-casting and before the wiping off material is placed in the device.

The device shown comprises a casing 1, consisting of the longitudinal walls 2, the end walls 3, the bottom wall 4, the lid 5 and two pieces of foam material 6.

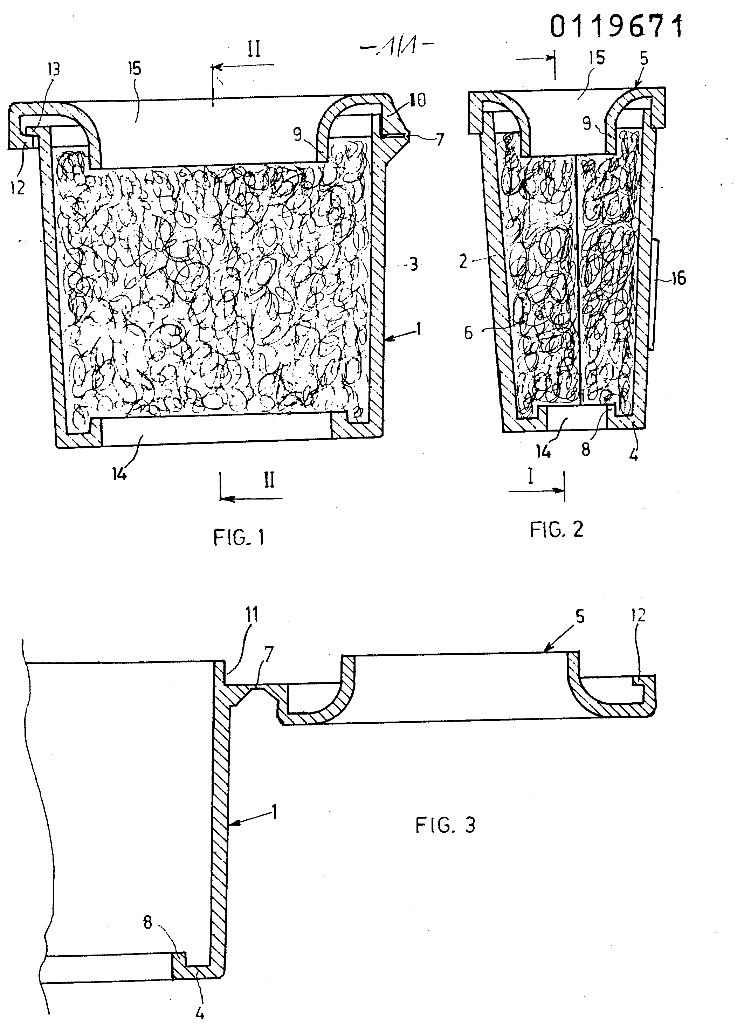

As becomes apparent in particular from figure 3, the lid 5 is one whole with the casing 1, in that a thin wall section 7 works as a hinging section. In the position of the sections as shown in figure 3, the die-casting of synthetic material can take place in a simple manner.

The bottom 4 is provided with an inwards projecting edge 8 and the lid 5 with an inwards projecting edge 9 and with an edge 10, which comes to lie in a recess 11 in the walls 2 and 3 of the casing 1. The edge 10 is provided furthermore at one cross edge with a projecting section 12, which can snap over an outwards projecting edge section 13 of the one end wall 3. The bottom edge 8 limits an opening 14 and the lid edge 9 an opening 15.

After the whole has been manufactured by die-casting in the shape as shown in figure 3, the two pieces of foam material 6 are placed in the casing 1, whereupon the lid 5 is flapped over and brought into the position as shown in figure 1. Thus the foam material 6 is enclosed firmly in the casing 1, which is due in particular to the presence of the edges 8 and 9.

One of the walls of the casing 1 can be provided with a well known means 16 for fastening the device to a wall 4 as e.g. of an engine compartment. The means 16 can comprise an adhesive layer or a magnetic disc.

CLAIMS:

1. Device for wiping off an oil dip stick or a similar oblong object, said device comprising a casing (1) which is closed essentially at all sides, of which casing (1) two essentially oppositely situated wall sections (4,5) are provided with a passage opening (14,15 resp.) for moving a dip stick to and fro through the casing (1), and in said casing a material (6) being provided along which or through which the dip stick can be slid for wiping it off.

2. Device according to claim 1,
   characterized in
   that at least one wall (2) of the casing (1) is provided with means (16) with which the casing can be fastened to a wall, such as the wall of an engine compartment.

3. Device according to claim 2,
   characterized in
   that the means (16) for fastening, either in a detachable manner or not, is an adhesive or magnetic means.

4. Device according to anyone of the preceding claims,
   characterized in
   that the casing (1) essentially has the shape of a parallelepiped, whereas the edges (8,9) of the passage openings (14, 15 resp.) are bent inwards.

5. Device according to claim 4,
   characterized in
   that the casing (1) is made of synthetic material by means of die-casting and that one wall section (5) having a passage opening (15) is hinged to the rest of the casing (1) by means of a thin section (7) of synthetic material.

6. Device according to claim 4,
   characterized in that those edges of the casing (1) and of the wall section (5) hinged thereto which are situated opposite of the hinged edges, are provided with means (12,13) which co-operate by snapping into one another.

7. Device according to anyone of the preceding claims, characterized in
that the material for wiping off a dip stick consists of two pieces of plate-shaped foam material (6), which can be placed against one another in the casing (1) in such a way, that their contact plane lies in the plane passing through the centre lines of the elongated passage openings (14,15) in the casing (1).

8. Device according to anyone of the claims 5 - 7, characterized in
that the walls (2,3) of the casing (1) slightly taper towards one another from the wall section (5) hinged thereto onwards.

----

FIG. 1

FIG. 2

FIG. 3

0119671

-1/1-

**European Patent Office**

## EUROPEAN SEARCH REPORT

| | DOCUMENTS CONSIDERED TO BE RELEVANT | | EP 84200415.2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | GB - A - 2 021 399 (SARTORIO) <br>   * Fig. 1,2,5,6; claim 3; page 1, lines 61-72 * | 1,2,4, 7 | F 01 M 11/12 <br> F 16 N 31/02 <br> B 08 B 1/00 |
| A | | 5 | B 65 D 1/22 |
| | -- | | |
| X | GB - A - 682 693 (EMMS) <br>   * Totality * | 1,2 | |
| | -- | | |
| X | US - A - 4 023 231 (HABER) <br>   * Fig. 2,3; column 2, lines 28-33 * | 1,2 | |
| Y | | 3 | |
| | -- | | |
| Y | US - A - 4 374 445 (WILSON) <br>   * Fig. 1; column 2, lines 20-32 * | 3 | |
| | -- | | **TECHNICAL FIELDS SEARCHED (Int. Cl. ³)** |
| A | US - A - 3 661 248 (ISEN) <br>   * Fig. 3; column 1, line 45 - column 2, line 33 * | 5,6 | F 01 M 11/00 <br> F 16 N 31/00 <br> F 16 N 33/00 <br> B 08 B 1/00 |
| | -- | | B 21 C 9/00 |
| A | GB - A - 1 365 040 (FERRERO) <br>   * Fig. 1-4; page 2, lines 15-20 * | 5,6 | B 21 C 43/00 <br> B 65 D 1/00 |
| | -- | | B 65 D 51/00 |
| A | AT - B - 296 138 (SAFIPLAST) <br>   * Fig. 1,3,4,5; page 2, line 41 - page 3, line 45 * | 5,6 | G 02 C 13/00 <br> B 65 D 43/00 |
| | -- | | |

The present search report has been drawn up for all claims

| Place of search | Date of completion of the search | Examiner |
|---|---|---|
| VIENNA | 14-06-1984 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

**European Patent Office**

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | EP - A2 - 0 062 357 (GIORNI)<br>* Fig. 2,8 *<br>---- | 1,2,8 | |

TECHNICAL FIELDS SEARCHED (Int. Cl.³)